# EUROPÄISCHE PATENTSCHRIFT

(11) **EP 3 377 429 B1**
(45) Veröffentlichungstag und Bekanntmachung des Hinweises auf die Patenterteilung: **29.07.2020**
(21) Anmeldenummer: 16801121.1
(22) Anmeldetag: 27.09.2016
(51) Int. Cl.: B65G 51/32, B65G 51/26

(54) **ROHRPOSTSTATION**
PNEUMATIC TUBE STATION
POSTE DE TUBE PNEUMATIQUE

(30) Priorität: 19.11.2015 AT 509862015
(43) Veröffentlichungstag der Anmeldung: 26.09.2018
(73) Patentinhaber: Hanazeder, Erwin, 4912 Neuhofen im Innkreis (AT)
(72) Erfinder: Hanazeder, Erwin, 4912 Neuhofen im Innkreis (AT)
(74) Vertreter: Hübscher & Partner Patentanwälte GmbH
(86) Internationale Anmeldenummer: PCT/AT2016/050258
(87) Internationale Veröffentlichungsnummer: WO 2017/083892

(56) Entgegenhaltungen:
- AT-A4- 515 548
- AT-B1- 513 627

## Beschreibung

Die Erfindung bezieht sich auf eine Rohrpoststation für Rohrpostbüchsen, deren Deckel um eine zur Büchsenachse parallele Lagerachse verschwenkbar sind, mit einem an eine Empfangsleitung und eine Sendeleitung angeschlossenen Gehäuse (1) und mit einer innerhalb des Gehäuses um eine vertikale Drehachse zwischen einer Empfangsstellung und einer Entladestellung verschwenkbaren Büchsenaufnahme, die die zur Drehachse achsparallelen Rohrpostbüchsen in einer vorgegebenen Drehlage hält, und mit dem Gehäuse zugeordneten Anschlagführungen für die Büchsendeckel.

Um Rohrpostbüchsen mit um achsparallele Lagerachsen verschwenkbaren Deckeln vorteilhaft entladen zu können, sind Rohrpoststationen bekannt (AT 515 548 B1), bei denen das an ein Empfangs- und ein Senderohr angeschlossene Gehäuse zwischen dem Empfangs- und dem Senderohr eine Austragsöffnung für den Büchseninhalt aufweist und die Büchsenaufnahme um eine vertikale Achse drehbar gelagert ist, die mit der Achse eines Kreisbogens zusammenfällt, entlang dessen das Empfangsrohr, die Austragsöffnung und das Senderohr nacheinander angeordnet sind. Die kreisförmige Bewegung der Büchsenaufnahme vom Empfangsrohr zur Austragsöffnung für den Büchseninhalt kann zum Öffnen der Büchsendeckel über eine dem Gehäuse zugehörige Führungskulisse und die Bewegung der Büchsenaufnahme von dieser Austragsöffnung zum Senderohr zum Schließen des Büchsendeckels über eine weitere Führungskulisse genützt werden. Die Büchsendeckel der Rohrpostbüchsen werden gegenüber dem Büchsenkörper, der in der entlang einer Kreisbahn bewegten Büchsenaufnahme festgehalten wird, an den jeweiligen Führungskulissen zurückgehalten, was je nach dem Verlauf der Führungskulissen ein Verschwenken des Büchsendeckels gegenüber dem Büchsenkörper im Öffnungs- oder Schließsinn bedingt. Da die in axialer Richtung beidseitig offene Büchsenaufnahme die bodenseitige Austragsöffnung für den Büchseninhalt erst nach dem Öffnen des unteren Büchsendeckels erreicht, wird die Rohrpostbüchse über die Austragsöffnung entleert. Beim Weiterdrehen der Büchsenaufnahme zum Senderohr wird der untere Büchsendeckel entlang der zugehörigen Führungskulisse geschlossen, sodass die entladene Rohrpostbüchse über das Senderohr aus der Rohrpoststation ausgeschleust werden kann. Abgesehen davon, dass eine solche Rohrpoststation einen nicht unerheblichen Konstruktionsaufwand erfordert, bedingt das Hintereinanderreihen des Empfangsrohrs, der Austragsöffnung und des Senderohrs entlang eines Kreisbogens eine Gehäusegröße, für die in vielen Fällen das Platzangebot kaum ausreicht.

Der Erfindung liegt somit die Aufgabe zugrunde, eine Rohrpoststation mit einfachen konstruktiven Mitteln so auszugestalten, dass trotz eines geringen Platzbedarfs gute Voraussetzungen insbesondere für ein Entladen der empfangenen Rohrpostbüchsen geschaffen werden.

Ausgehend von einer Rohrpoststation der eingangs geschilderten Art löst die Erfindung die gestellte Aufgabe dadurch, dass in der vorgegebenen Drehlage der Rohrpostbüchsen die Lagerachsen der Büchsendeckel mit der Drehachse der Büchsenaufnahme zusammenfallen und dass die Empfangsleitung als Sendeleitung einsetzbar ist.

Da die Drehachse der Büchsenaufnahme mit den Lagerachsen der Büchsendeckel in der Solldrehlage der Rohrpostbüchsen zusammenfällt, kann die für die Verlagerung der Büchsenaufnahme benötigte Grundfläche im Wesentlichen auf eine Kreisfläche mit einem dem Büchsendurchmesser entsprechenden Radius beschränkt werden, was eine besonders gedrängte Bauweise mit dem Vorteil mit sich bringt, dass zum Öffnen und Schließen die Büchsendeckel nicht gegenüber dem Gehäuse verlagert werden und daher lediglich durch entsprechende Führungsanschläge in Ihrer Lage festzuhalten sind, sodass sich hinsichtlich des Öffnens und Schließens der Rohrpostbüchsen besonders einfache Konstruktionsverhältnisse ergeben. Die Drehung der Büchsenaufnahme um die Lagerachsen der Büchsendeckel zwischen einer Empfangsstellung und einer Entladestellung setzt voraus, dass das an das Gehäuse angeschlossene Empfangsrohr auch als Senderohr eingesetzt werden kann, was eine zusätzliche Konstruktionsvereinfachung erlaubt. Zum Entladen einer in der Rohrpoststation empfangenen Rohrpostbüchse muss zunächst sichergestellt werden, dass die Rohrpostbüchse in der Büchsenaufnahme so um ihre Achse gedreht wird, dass die Lagerachsen der Büchsendeckel mit der Drehachse der Büchsenaufnahme zusammenfallen. Zu diesem Zweck weist die Büchsenaufnahme einen antreibbaren Drehteller auf, auf dem die Rohrpostbuchse aufruht. Mit Hilfe des Drehtellers wird die Rohrpostbüchse in die gewünschte Drehlage gedreht, die entweder durch einen entsprechenden Sensor für die Drehlage der Rohrpostbüchse oder einen mit der Rohrpostbüchse zusammenwirkenden Drehanschlag bestimmt wird. Stimmen die Lagerachsen der Büchsendeckel mit der Drehachse der Büchsenaufnahme überein, so kann die Büchsenaufnahme in die Entladestellung gedreht werden, in der sich der Büchsenkörper über eine Austragsöffnung im Gehäuseboden befindet. Da bei dieser Drehverlagerung der Rohrpostbüchsen von der Empfangsstellung zur Entladestellung die Büchsendeckel durch die gehäusefesten Anschlagführungen gegen eine Drehmitnahme festgehalten werden, wird die Rohrpostbüchse geöffnet, sodass in der Entladestellung der Büchseninhalt durch die bodenseitige Austragsöffnung fällt. Nach der Entladung der Rohrpostbüchse wird die Büchsenaufnahme in die Empfangsstellung unter einem Schließen der Büchsendeckel zurückgedreht, sodass die Rohrpostbüchse die Rohrpoststation über das nunmehr als Senderohr dienende Empfangsrohr wieder verlassen kann.

Besonders einfache Konstruktionsverhältnisse ergeben sich, wenn die Büchsenaufnahme eine mit axialem Abstand oberhalb des Gehäusebodens gelagerte, antreibbare Ringscheibe zur Halterung eines Aufnahmerohrs für die Rohrpostbüchsen umfasst. Diese außen zu lagernde Ringscheibe kann vorteilhaft beispielsweise über einen Zahnriementrieb angetrieben werden und nimmt die Rohrpostbüchse in einem Aufnahmerohr auf, in dem die Rohrpostbüchse sicher gehalten wird. Der axiale Abstand der Ringscheibe vom Gehäuseboden ist für die Aufnahme des Büchsendeckels bei der Drehung der Ringscheibe erforderlich. Obwohl für die grundsätzliche Funktion das Aufnahmerohr lediglich in einer Ringscheibe gelagert zu werden braucht, ergeben sich günstige Konstruktionsbedingungen, wenn das Aufnahmerohr zwischen der bodenseitigen Ringscheibe und einer deckenseitigen, mit axialem Abstand unterhalb der Gehäusedecke angeordneten Ringscheibe gehalten wird, die nach oben hin Raum für das Öffnen des oberen Gehäusedeckels frei lässt. Das Öffnen sowohl des unteren als auch des oberen Gehäusedeckels stellt eine Voraussetzung für ein Reinigen der Rohrpostbüchse in der Entladestellung dar, weil beispielsweise eine Reinigungsbürste von oben durch das Gehäuse in die beidseitig offene Rohrpostbüchse eingeführt werden kann. Die oben offene Rohrpostbüchse ermöglicht aber auch ein Ausstoßen des Büchseninhalts mithilfe eines zu diesem Zweck von oben in die Rohrpostbüchse eingeführten Werkzeugs.

Um wahlweise die beiden Büchsendeckel einer Rohrpostbüchse öffnen und schließen zu können, können die dem Gehäuseboden und der Gehäusedecke zugeordneten Anschlagführungen für die Büchsendeckel zwischen einer Gebrauchsstellung und einer Ruhestellung verlagerbar sein. In der aus der Gebrauchsstellung zurückgezogenen Ruhestellung werden die Büchsendeckel durch diese Führungsanschläge nicht gegenüber der sich mit der Büchsenaufnahme drehenden Rohrpostbüchse zurückgehalten und bleiben daher geschlossen. Dies ist insbesondere für die unteren Büchsendeckel dann erforderlich, wenn die Rohrpoststation auch zum Laden der Rohrpostbüchsen eingesetzt werden soll, weil in diesem Fall die Rohrpostbüchse zum Befüllen unten geschlossen sein muss, während das Ladegut von oben in die Rohrpostbüchse eingebracht wird.

Um die in der Rohrpoststation zu empfangende Rohrpostbüchse gedämpft abbremsen zu können, kann innerhalb des Aufnahmerohrs der Büchsenaufnahme ein Luftpolster aufgebaut werden. Da das Aufnahmerohr jedoch mit axialem Abstand oberhalb des Gehäusebodens endet, ist für eine die Ringöffnung umschließende Dichtung zwischen der Ringscheibe und dem Gehäuseboden zu sorgen. Diese Dichtung kann sich vorteilhaft aus zwei Ringteilen zusammensetzen, von denen ein sich höchstens über einen halben Umfangsabschnitt erstreckender Ringteil der Ringscheibe zugeordnet ist und der andere die Dichtung zu einem geschlossenen Ring ergänzende, dem Gehäuse zugehörige Ringteil zumindest einen von der Ringöffnung wegschwenkbaren Abschnitt aufweist oder bildet. Durch diese Teilung der Dichtung beeinträchtigt diese Dichtung die Betätigung der Büchsendeckel während der Büchsenverlagerung nicht. Der der Ringscheibe zugehörige Ringteil wird ja mit der Rohrpostbüchse vom festgehaltenen Büchsendeckel weggedreht. Der dem Gehäuse zugehörige Ringteil würde allerdings der Drehbewegung des Ringteils auf der Ringscheibe im Wege stehen, wenn dieser Ringteil des Gehäuses nicht schwenkbar gelagert wäre oder einen entsprechend ausschwenkbaren Abschnitt hätte.

Da ein Luftpolster im Aufnahmerohr der Büchsenaufnahme im Allgemeinen nicht für eine ausreichend gedämpfte Abbremsung der Rohrpostbüchse sorgen kann, empfiehlt es sich, diesen Luftpolster in das an das Gehäuse anschließende Empfangsrohr hinein zu verlängern, was eine zusätzliche Abdichtung des Spalts zwischen der oberen Ringscheibe der Büchsenaufnahme und der Gehäusedecke erfordert. Diese Dichtung wird in gleicher Weise aus zwei Ringteilen wie die Dichtung im Bereich der unteren Ringscheibe ausgeführt.

In der Zeichnung ist der Erfindungsgegenstand beispielsweise dargestellt. Es zeigen
- Fig. 1: eine erfindungsgemäße Rohrpoststation in der Empfangsstellung in einem schematischen Vertikalschnitt,
- Fig. 2: diese Rohrpoststation in einem Schnitt nach der Linie II-II der Fig. 1,
- Fig. 3: eine der Fig. 1 entsprechende Darstellung der erfindungsgemäßen Rohrpoststation, jedoch in der Entladestellung,
- Fig. 4: einen Schnitt nach der Linie IV-IV der Fig. 3,
- Fig. 5: eine Ausführungsvariante einer erfindungsgemäßen Rohrpoststation ausschnittsweise im Bereich der unteren Ringscheibe in einem Vertikalschnitt und
- Fig. 6: eine zum Teil aufgerissene Draufsicht auf die untere Ringscheibe gemäß der Fig. 5.

Die dargestellte Rohrpoststation weist ein Gehäuse 1 mit einem Gehäuseboden 2 und mit einer Gehäusedecke 3 auf, die an ein Empfangsrohr 4 angeschlossen ist. Innerhalb des Gehäuses 1 ist eine Büchsenaufnahme 5 um eine vertikale Drehachse 6 drehbar gelagert, die eine untere und eine obere Ringscheibe 7 und ein diese Ringscheibe 7 verbindendes Aufnahmerohr 8 umfasst. Zur Lagerung der Büchsenaufnahme 5 dienen am Gehäuseboden 2 und an der Gehäusedecke 3 gelagerte Führungsrollen 9, zwischen denen die Ringscheiben 7 mit axialem Abstand vom Gehäuseboden 2 bzw. der Gehäusedecke 3 drehbar gelagert sind. Zum Antrieb der Büchsenaufnahme 5 dient ein Getriebemotor 10, der einen Zahnriementrieb 11 für die untere Ringscheibe 7 antreibt.

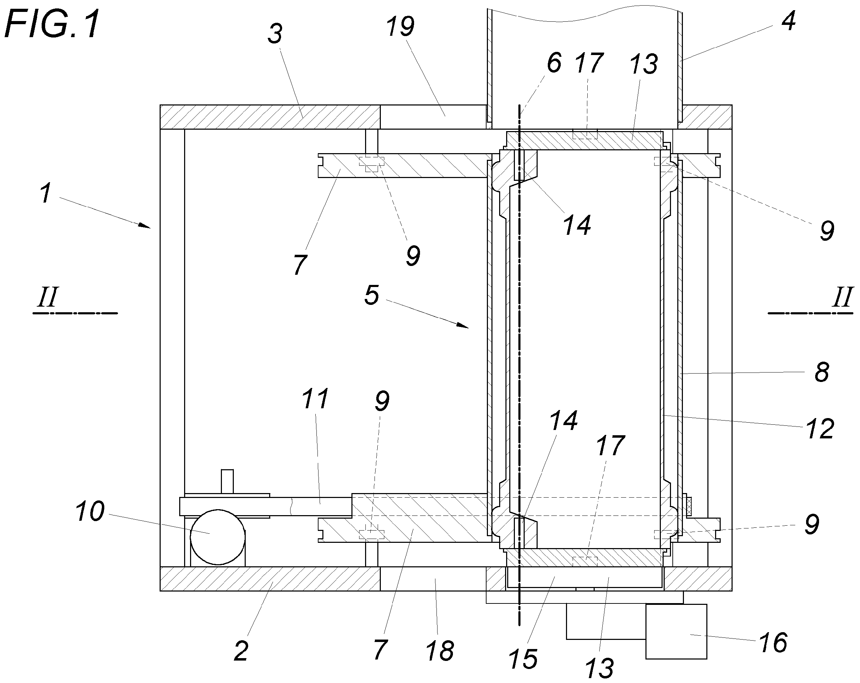

Wie insbesondere der Fig. 1 entnommen werden kann, ist das Aufnahmerohr 8 der Büchsenaufnahme 5 so angeordnet, dass eine vom Aufnahmerohr 8 aufgenommene Rohrpostbüchse 12 in einer vorgegebenen Drehlage die Büchsendeckel 13 so positioniert, dass deren Lagerachsen 14 mit der Drehachse 6 der Büchsenaufnahme 5 zusammenfallen. Um diese Drehlage der Rohrpostbüchse 12 sicherzustellen, muss die über das Empfangsrohr 4 in das Aufnahmerohr 8 geförderte Rohrpostbüchse 12 innerhalb des Aufnahmerohrs 8 in die geforderte Drehlage gedreht werden. Zu diesem Zweck ist im Gehäuseboden 2 ein zum Anschluss des Empfangsrohrs 4 koaxialer Drehteller 15 vorgesehen, der über einen Getriebemotor 16 angetrieben wird und die auf dem Drehteller 15 aufruhende Rohrpostbüchse 8 in die von einem Sensor oder einem Drehanschlag überwachte Solldrehlage dreht, in der die Lagerachsen 14 der Büchsendeckel 13 mit der Drehachse 6 der Büchsenaufnahme 5 zusammenfallen.

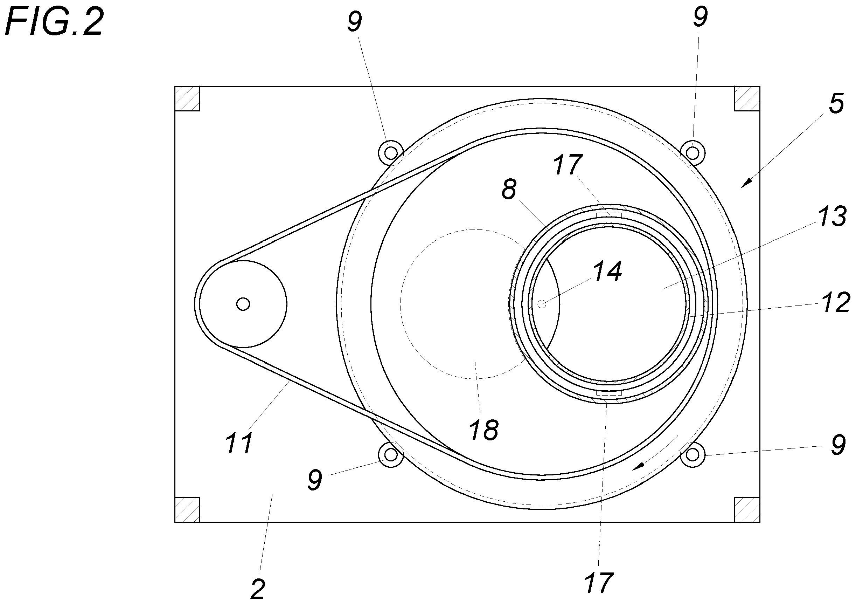

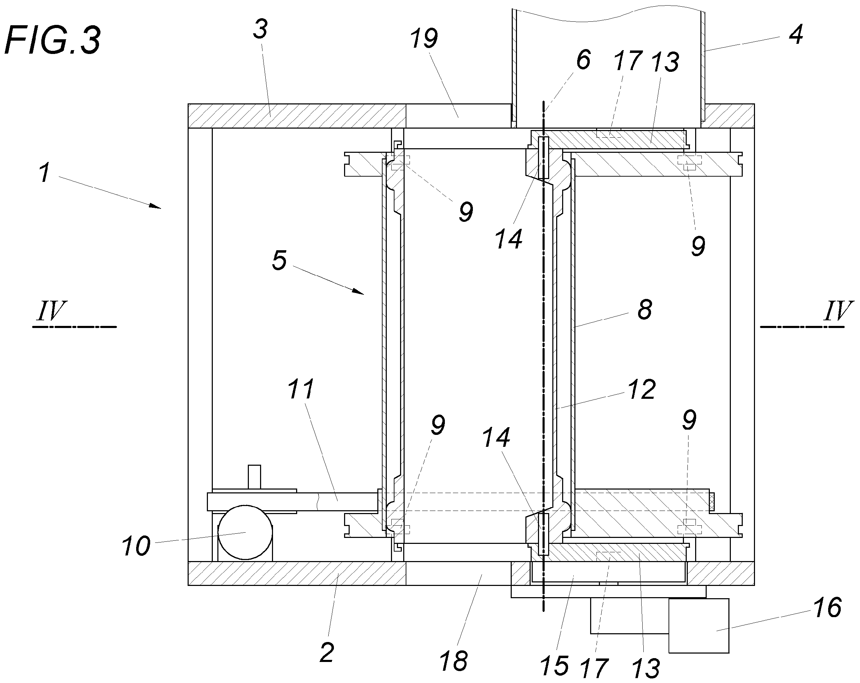

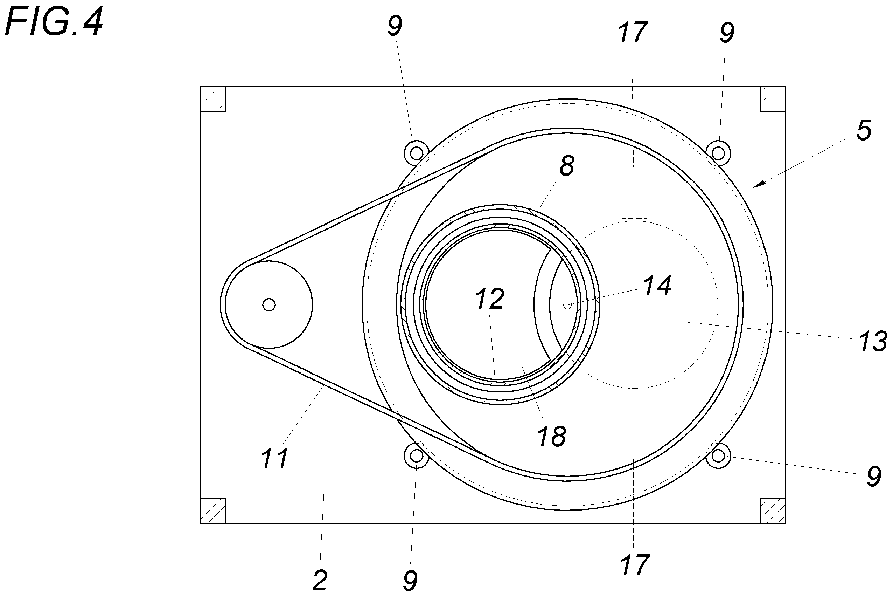

Aufgrund dieser Maßnahme brauchen die Büchsendeckel 13 während der Drehung der Büchsenaufnahme 5 lediglich durch gehäusefeste Anschlagführungen 17 festgehalten zu werden, um die Rohrpostbüchsen 8 während der Drehung der Büchsenaufnahme 5 aus der in den Fig. 1 und 2 dargestellten Empfangsstellung in die Entladestellung nach den Fig. 3 und 4 zu öffnen. Beim Öffnen der Büchsendeckel 13 tritt das Ladegut durch die Büchsenöffnung auf den Gehäuseboden 2 aus und wird entlang des Gehäusebodens 2 bis zu einer die Entladestellung bestimmenden Austrittsöffnung 18 im Gehäuseboden 2 gefördert, durch die sie aus dem Gehäuse 1 fällt. Da eine zur Austrittsöffnung 18 korrespondierende Durchtrittsöffnung 19 in der Gehäusedecke 3 vorgesehen ist, kann das Austragen des Ladeguts aus der Rohrpostbüchse 12 durch ein entsprechendes Werkzeug unterstützt werden, das von oben durch die Durchtrittsöffnung 19 in die Rohrpostbüchse 12 eingeführt wird. Durch diese Durchtrittsöffnung 19 ist auch eine Reinigung der Rohrpostbüchse 12 möglich, wobei vorteilhaft das Werkzeug zum Ausstoßen des Ladeguts auch zum Reinigen der Rohrpostbüchse ausgebildet sein kann.

Nach dem Entladen der Rohrpostbüchse wird die Büchsenaufnahme 5 wieder in die Empfangsstellung zurückgedreht, wobei die Büchsendeckel 13 geschlossen werden, weil sich die Rohrpostbüchse 12 gegenüber den zwischen den Anschlagführungen 17 festgehalten Büchsendeckeln 13 in die Schließstellung bewegt. Die geschlossene Rohrpostbüchse 12 kann dann durch das Empfangsrohr 4 als Senderohr aus der Rohrpoststation ausgefahren werden.

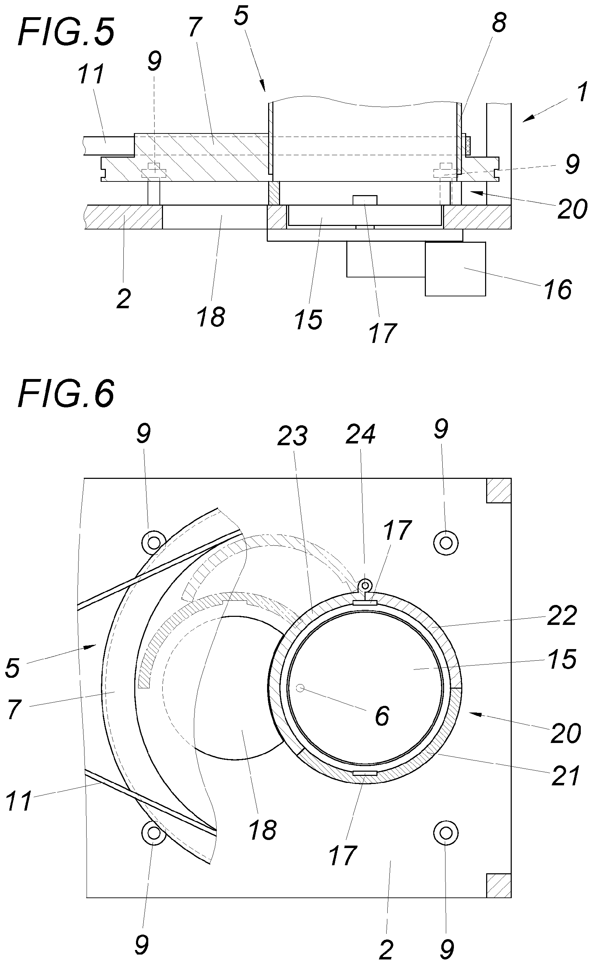

Wie den Fig. 5 und 6 entnommen werden kann, kann zum Aufbau eines Luftpolsters innerhalb des Aufnahmerohrs 8 der Büchsenaufnahme 5 und im Anschluss daran im Empfangsrohr 4 das Aufnahmerohr 8 in der Empfangsstellung der Büchsenaufnahme 5 gegenüber dem Gehäuse 1 durch Dichtungen 20 abgedichtet werden. Diese Dichtungen 20 sind aus zwei Ringteilen 21 und 22 zusammengesetzt, wie dies insbesondere der Fig. 6 entnommen werden kann. Während der Ringteil 21 jeweils auf der dem Gehäuseboden 2 bzw. der Gehäusedecke 3 zugekehrten Seite mit der jeweiligen Ringscheibe 7 verbunden ist, ist der Ringteil 22 dem Gehäuse 1 boden- bzw. deckenseitig zugeordnet. Wird die Büchsenaufnahme 5 aus der Empfangsstellung, in der sich die Ringteile 21 und 22 zur geschlossenen Dichtung 20 ergänzen, um die Drehachse 6 in die in der Fig. 6 strichpunktiert angedeutete Entladestellung gedreht, so dreht sich der Ringteil 21 auf den Ringscheiben 7 mit, was nur möglich ist, wenn zumindest ein Abschnitt 23 des dem Gehäuse 1 zugehörigen Ringteils 21 um eine Achse 24 ausschwenkbar gelagert ist. Durch diese Verschwenkbarkeit des Abschnitts 23 des Ringteils 22 wird die Bewegungsbahn für den mit der Ringscheibe 7 verbundenen Ringteil 21 freigegeben. Mit dem Rückdrehen der Büchsenaufnahme 5 aus der Entladestellung in die Empfangsstellung kehren der Ringteil 21 und der verschwenkbare Abschnitt 23 des Ringteils 22 wieder in ihre Ausgangslage zurück, was für den verschwenkbaren Abschnitt 23 eine entsprechende Federbelastung erfordert.

## Patentansprüche

1. Rohrpoststation für Rohrpostbüchsen (12), deren Deckel (13) um eine zur Büchsenachse parallele Lagerachse (14) verschwenkbar sind, mit einem an eine Empfangsleitung (4) und eine Sendeleitung angeschlossenen Gehäuse (1) und mit einer innerhalb des Gehäuses (1) um eine vertikale Drehachse (6) zwischen einer Empfangsstellung und einer Entladestellung verschwenkbaren Büchsenaufnahme (5), die die zur Drehachse (6) achsparallelen Rohrpostbüchsen (12) in einer vorgegebenen Drehlage hält, und mit dem Gehäuse (1) zugeordneten Anschlagführungen (17) für die Büchsendeckel (13), **dadurch gekennzeichnet, dass** in der vorgegebenen Drehlage der Rohrpostbüchsen (12) die Lagerachsen (14) der Büchsendeckel (13) mit der Drehachse (6) der Büchsenaufnahme (5) zusammenfallen und dass die Empfangsleitung (4) als Sendeleitung einsetzbar ist.

2. Rohrpoststation nach Anspruch 1, **dadurch gekennzeichnet, dass** die Büchsenaufnahme (5) eine mit axialem Abstand oberhalb des Gehäusebodens (2) gelagerte, antreibbare Ringscheibe (7) zur Halterung eines Aufnahmerohrs (8) für die Rohrpostbüchsen (12) umfasst.

3. Rohrpoststation nach Anspruch 2, **dadurch gekennzeichnet, dass** das Aufnahmerohr (8) der Büchsenaufnahme (5) zwischen der bodenseitigen Ringscheibe (7) und einer deckenseitigen, mit axialem Abstand unterhalb der Gehäusedecke (3) angeordneten Ringscheibe (7) gehalten ist.

4. Rohrpoststation nach Anspruch 2 oder 3, **dadurch gekennzeichnet, dass** die dem Gehäuseboden (2) und der Gehäusedecke (3) zugeordneten Anschlagführungen (17) für die Büchsendeckel (13) zwischen einer Gebrauchsstellung und einer Ruhestellung verlagerbar sind.

5. Rohrpoststation nach einem der Ansprüche 2 bis 4, **dadurch gekennzeichnet, dass** zwischen dem Gehäuse (1) und zumindest der bodenseitigen Ringscheibe (7) eine deren Ringöffnung umschließende Dichtung (20) aus zwei Ringteile (21, 22) vorgesehen ist, von denen ein sich höchstens über einen halben Umfangsabschnitt erstreckender Ringteil (21) der Ringscheibe (7) zugeordnet ist und der andere die Dichtung (20) zu einem geschlossenen Ring ergänzende, dem Gehäuse (1) zugehörige Ringteil (22) zumindest einen von der Ringöffnung wegschwenkbaren Abschnitt (23) aufweist oder bildet.

## Claims

1. Pneumatic tube station for pneumatic dispatch carriers (12), the covers (13) of which can be pivoted about a bearing spindle (14) parallel to the carrier axis, having a housing (1) attached to a reception line (4) and a dispatch line, and having a carrier receiver (5) which can be pivoted within the housing (1) about a vertical axis of rotation (6) between a reception position and an unloading position, which carrier receiver holds the pneumatic dispatch carriers (12), which are axially parallel to the axis of rotation (6), in a preset rotational position, and having stop guides (17), allocated to the housing (1), for the carrier covers (13), **characterised in that**, in the preset rotational position of the pneumatic dispatch carriers (12), the bearing spindles (14) of the carrier covers (13) coincide with the axis of rotation (6) of the carrier receiver (5), and that the reception line (4) can be used as a dispatch line.

2. Pneumatic tube station as claimed in claim 1, **characterised in that** the carrier receiver (5) comprises a drivable annular disc (7), mounted at an axial distance above the housing floor, for holding a receiver tube (8) for the pneumatic dispatch carriers (12).

3. Pneumatic tube station as claimed in claim 2, **characterised in that** the receiver tube (8) of the carrier receiver (5) is held between the floor-side annular disc (7) and a top-side annular disc (7) disposed at an axial distance below the housing top (3).

4. Pneumatic tube station as claimed in claim 2 or 3, **characterised in that** the stop guides (17) - allocated to the housing floor (2) and to the housing top (3) - for the carrier covers (13) can be displaced between a usage position and an inoperative position.

5. Pneumatic tube station as clamed in any one of claims 2 to 4, **characterised in that**, between the housing (1) and at least the floor-side annular disc (7), a seal (20) - surrounding the annular opening of said annular disc - consisting of two annular parts (21, 22) is provided, one annular part (21) of which - extending over at most half a peripheral section - is allocated to the annular disc (7), and the other annular part (22) - appertaining to the housing (1) and supplementing the seal (20) to form a closed ring - comprises or forms at least one section (23) which can be pivoted away from the annular opening.

## Revendications

1. Poste de tube pneumatique pour des étuis de tube pneumatique (12), dont les couvercles (13) peuvent pivoter autour d'un axe de palier (14) parallèle à l'axe d'étui, comprenant un boîtier (1) raccordé à une conduite de réception (4) et à une conduite d'envoi et comprenant un logement d'étuis (5) pouvant pivoter à l'intérieur du boîtier (1) autour d'un axe de rotation vertical (6) entre une position de réception et une position d'envoi, qui maintient les étuis de tube pneumatique (12) axialement parallèles à l'axe de rotation (6) dans une position de rotation prédéterminée, et comprenant des guidages de butée (17) associés au boîtier (1) pour les couvercles d'étui (13), **caractérisé en ce que**, dans la position de rotation prédéterminée des étuis de tube pneumatique (12), les axes de palier (14) des couvercles d'étui (13) coïncident avec l'axe de rotation (6) du logement d'étuis (5), et **en ce que** la conduite de réception (4) est utilisable comme conduite d'envoi.

2. Poste de tube pneumatique selon la revendication 1, **caractérisé en ce que** le logement d'étuis (5) comprend une rondelle annulaire pouvant être entraînée (7) qui est montée à une distance axiale au-dessus du fond de boîtier (2) et qui a pour fonction de supporter un tube de logement (8) pour les étuis de tube pneumatique (12).

3. Poste de tube pneumatique selon la revendication 2, **caractérisé en ce que** le tube de logement (8) du logement d'étuis (5) est maintenu entre la rondelle annulaire de fond (7) et une rondelle annulaire de couvercle (7) qui est disposée à une distance axiale en dessous du plafond de boîtier (3).

4. Poste de tube pneumatique selon la revendication 2 ou 3, **caractérisé en ce que** les guidages de butée (17) pour les couvercles d'étuis (13), qui sont associés au fond de boîtier (2) et au plafond de boîtier (3), peuvent être déplacés entre une position d'utilisation et une position de repos.

5. Poste de tube pneumatique selon l'une quelconque des revendications 2 à 4, **caractérisé en ce qu'**il est prévu entre le boîtier (1) et au moins la rondelle annulaire de fond (7) un joint annulaire (20) en deux parties d'anneau (21, 22) qui entourent son ouverture annulaire, dont une partie d'anneau (21) qui s'étend au maximum sur une semi-périphérie est associée à la rondelle annulaire (7) et dont l'autre partie d'anneau (22) qui correspond au boîtier (1) et qui complète le joint (20) en un anneau fermé présente ou forme au moins une partie (23) qui peut être écartée de l'ouverture annulaire par pivotement.
